# EUROPÄISCHE PATENTSCHRIFT

(11) **EP 3 485 603 B1**
(45) Veröffentlichungstag und Bekanntmachung des Hinweises auf die Patenterteilung: **07.10.2020**
(21) Anmeldenummer: 17740746.7
(22) Anmeldetag: 18.07.2017
(51) Int. Cl.: H04L 9/32, H04L 29/06

(54) **TOKEN-BASIERTES AUTHENTISIEREN MIT SIGNIERTER NACHRICHT**
TOKEN BASED AUTHENTICATION USING A SIGNED MESSAGE
AUTHENTIFICATION PAR JETON AVEC MESSAGE SIGNÉ

(30) Priorität: 18.07.2016 DE 102016213104
(43) Veröffentlichungstag der Anmeldung: 22.05.2019
(73) Patentinhaber: bitagentur GmbH & Co. KG, 80803 München (DE)
(72) Erfinder: EIDENSCHINK, Maximilian, 80801 München (DE); SENF, Marcel, 81677 München (DE)
(74) Vertreter: Herre, Peter
(86) Internationale Anmeldenummer: PCT/EP2017/068161
(87) Internationale Veröffentlichungsnummer: WO 2018/015402

(56) Entgegenhaltungen:
- WO-A1-2007/122224
- WO-A1-2011/110402
- AT-U1- 13 290
- US-A1- 2010 049 984
- "Chapter 1: Overview of Cryptography ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 1 - 48 , 1. Oktober 1996 (1996-10-01), XP001525001, ISBN: 978-0-8493-8523-0 Gefunden im Internet: URL:http://www.cacr.math.uwaterloo.ca/hac/
- "Chapter 11: Digital Signatures ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 425 - 488 , 1. Oktober 1996 (1996-10-01), XP001525011, ISBN: 978-0-8493-8523-0 Gefunden im Internet: URL:http://www.cacr.math.uwaterloo.ca/hac/

## Beschreibung

### GEBIET DER ERFINDUNG

Die vorliegende Erfindung betrifft allgemein das Gebiet der Absicherung von Computersystemen, insbesondere das Authentisieren und Authentifizieren von Benutzern an Computersystemen.

### HINTERGRUND DER ERFINDUNG

Zur Autorisierung von Benutzern für den Zugriff auf Anwendungen und Daten auf Computersystemen ist eine Überprüfung der Identität der Benutzer erforderlich. Erst nach erfolgreicher Überprüfung der behaupteten Identität soll Zugriff auf Anwendungen und Daten gewährt werden.

Eine gängige Praxis zur Überprüfung der behaupteten Identität eines Benutzers ist das Abfragen statischer Kennwörter. Dieses Vorgehen hat den Nachteil, dass der Benutzer eine Kennworteingabe tätigen muss, die fehlerbehaftet ist und für den Benutzer lästig ist. Die Abfrage statischer Kennwörter weist zudem den Nachteil auf, dass ein sicheres Kennwort in der Regel notiert werden muss und die Aufzeichnung des Kennworts an Unbefugte gelangen kann. Wird hingegen ein einfaches Kennwort gewählt, kann dieses leicht erraten und deshalb in einem hinreichend kurzen Zeitraum, beispielsweise durch Probieren ("brute force attack"), ermittelt werden.

Aus US 2010/0049984 A1 ist ein Verfahren zum Authentisieren eines Benutzers eines Mobiltelefons an einem Server bekannt. Das Mobiltelefon enthält einen integrierten Schaltkreis, in dem eine Benutzeridentifikation gespeichert ist. Benutzeridentifikation und aktuelle Zeit werden mittels eines Signaturschlüssels signiert und an den Server übermittelt. Der Server überprüft die Gültigkeit der Signatur mit dem gleichen Signaturschlüssel, der somit als ein gemeinsamer Schlüssel für Benutzer und Server dient.

Aus JP 2012-138650 A ist ein Verfahren zum zeitbasierten Authentifizieren eines Datenstromes bekannt. Aus dem Datenstrom werden Hashdaten generiert, die mittels einer elektronischen Signatur versehen werden.

Aus US 8,370,952 B1 ist ein Token bekannt, bei dem die Eigentümerschaft des Tokens durch Verschlüsselung mit einem privaten Schlüssel, die von einem Identitätsprovider durchgeführt wird, anonymisiert wird. Ein Service Provider ist mit dem korrespondierenden öffentlichen Schlüssel in der Lage, auf eine gültige Identität zu schließen, ohne diese selbst entschlüsseln zu können.

Aus WO 2007/122224 A1 ist ein USB-Token (Universal Serial Bus) bekannt, das sich als Eingabegerät (Human Interface Device, HID) am Computersystem anmeldet und in der Lage ist, Tastatureingaben auf Knopfdruck abzusetzen. Dadurch kann das Eingabegerät vordefinierte Tastatureingaben wie beispielsweise ein Kennwort in Klartext oder mittels eines symmetrischen Verfahrens verschlüsselt an das Computersystem übertragen.

Dieses USB-Token hat den Nachteil, dass eine individuelle Einbindung einer Vielzahl von Anwendungen entweder die Verwendung des gleichen Kennworts erforderlich macht oder eine spezifische Auswahl durch den Benutzer getroffen muss, welches im USB-Token gespeicherte Kennwort an die jeweilige Anwendung zu übertragen ist, falls das USB-Token in der Lage ist, mehrere Kennwörter zu speichern.

Zudem stellt die Übertragung von Geheimnissen wie beispielsweise von Kennwörtern generell ein Sicherheitsrisiko dar. Challenge-Response-Verfahren reduzieren die damit verbundenen Risiken, indem nicht ein Geheimnis (shared secret) zur Authorisierung übermittelt wird, sondern die authentifizierende Stelle eine Aufgabe (challenge) stellt. Die authentifizierende Stelle kann anhand der Antwort (response) des zu authorisierenden Benutzers erkennen kann, dass jener das Geheimnis kennt.

Um die zu übertragenden Nachrichten entsprechend zu schützen, kann eine Public-Key-Infrastruktur (PKI) eingesetzt werden. Jedem Benutzer einer Public-Key-Infrastruktur wird sowohl ein öffentlicher als auch ein privater Schlüssel zugewiesen. Dieses Schlüsselpaar kann mit einem von einer vertrauenswürdigen Zertifizierungsstelle ausgegebenen Zertifikat verknüpft werden, das den jeweiligen öffentlichen und privaten Schlüssel an einen zugehörigen Benutzer bindet.

Zur Gewährleistung der Sicherheit muss sichergestellt werden, dass der private Schlüssel eines Benutzers geheim bleibt und nur dem berechtigten Benutzer, dem dieser Schlüssel zugeordnet ist, zum Erzeugen einer Signatur oder zum Entschlüsseln von Nachrichten zur Verfügung steht. Häufig werden Smartcards oder USB-Token eingesetzt, um den privaten und den öffentlichen Schlüssel und das Zertifikat zu speichern und die kryptografischen Berechnungen in Verbindung mit dem privaten Schlüssel auszuführen.

Der Einsatz solcher Smartcards und USB-Tokens hat den Nachteil, dass spezifische Anpassungen der Authentifizierungsroutinen der Anwendungen erforderlich sind, da anstelle der Kommunikation mit herkömmlichen Eingabegeräten Nachrichten an eine Smartcard gesendet werden müssen. Die Smartcard signiert die empfangene Nachricht und sendet die signierte Nachricht zur Überprüfung an die Anwendung.

### AUFGABEN UND ZUSAMMENFASSUNG DER ERFINDUNG

Es ist eine Aufgabe der Erfindung, das Authentifizieren von Benutzern in einer Form zu ermöglichen, die einerseits ein hohes Maß an Sicherheit bietet und andererseits möglichst geringen Anpassungsaufwand bei vorhandenen Anwendungen nach sich zieht.

Die vorliegende Erfindung beruht auf der Erkenntnis, dass zum sicheren Authentifizieren eines Benutzers keine gemeinsame Information zwischen Benutzer und authentifizierender Stelle erforderlich ist, die geheim gehalten werden muss. Es ist für die Erfindung wesentlich, (i) eine Nachricht mit einem spezifischen Aufbau zu signieren, (ii) die Gültigkeit der Signatur im Rahmen eines asymmetrischen kryptografischen Verfahrens zu prüfen, und (iii) anhand des spezifischen Aufbaus der Nachricht die wiederholte Überprüfung einer bereits erhaltenen Nachricht innerhalb eines vertretbaren Zeitintervalls zu erkennen.

Der Vorteil der Erfindung besteht darin, dass auf der Seite der Authentifizierung kein Geheimnis erforderlich ist. Alle zur Authentifizierung erforderlichen Daten können öffentlich bekannt sein.

Nach einem ersten Aspekt der Erfindung ist ein Verfahren zum Authentisieren eines Benutzers an einem Computersystem mit folgenden, in einem Token ausgeführten Schritten vorgesehen:
- Erzeugen eines Zählerwertes unter Verwendung einer im Token implementierten Zähleinheit, wobei zumindest ein Abschnitt erzeugter Zählerwerte eine streng monotone Folge bildet,
- Erzeugen einer Nachricht in Abhängigkeit des erzeugten Zählerwertes,
- Signieren der erzeugten Nachricht unter Verwendung eines privaten Schlüssels des Benutzers, wobei der private Schlüssel im Token gespeichert ist, und wobei der private Schlüssel oder eine Kopie davon dem Computersystem (70) nicht zur Verfügung gestellt wird, und
- Senden der signierten Nachricht an das Computersystem.

Vorzugsweise ist das Token dazu eingerichtet, dass der im Token gespeicherte private Schlüssel nicht von Ressourcen außerhalb des Tokens ausgelesen werden kann.

In einem bevorzugten Ausführungsbeispiel der Erfindung ist das Token dazu eingerichtet, sich als Eingabegerät (Human Interface Device) am Computersystem anzumelden. Das Senden der signierten Nachricht kann das Codieren und Übertragen der signierten Nachricht als Eingabedaten, insbesondere als Tastatureingabedaten (beispielsweise mittels Tastatur-Scancodes), umfassen.

Die Nachricht kann in Abhängigkeit eines oder mehrerer weiterer Zählerwerte erzeugt werden. Ein Zählerwert kann ein numerischer Zählerwert, beispielsweise eine Ganzzahl sein, die bei erneuter Abfrage der Zähleinheit inkrementiert wird. Es sind jedoch auch andere Typen von Zählerwerten vorgesehen. So kann auch eine Zeitangabe, beispielsweise unter Einbeziehung des Datums als Zeitstempel, vorgesehen sein. Das in der Zeitangabe enthaltene Datum kann nach einem konventionellen Kalender, beispielsweise dem gregorianischen Kalender, codiert sein. Es kann auch eine numerische Darstellung des Datums vorgesehen sein, beispielsweise in Sekunden seit einem Initialdatum.

In einem bevorzugten Ausführungsbeispiel der Erfindung umfasst die Zähleinheit eine Uhr. Der Zählerwert kann einen Zeitstempel umfassen. Dabei kann der in der Nachricht codierte Zählerwert auf dem Zeitstempel beruhen oder zusätzlich zu einem beispielsweise numerischen Zählerwert vorhanden sein.

Für die Zählerwerte kommen grundsätzlich alle Inhalte in Frage, die bei erneuter Abfrage der Zähleinheit als nachfolgend erzeugter Zählerwert gegenüber einem vorher erzeugten Zählerwert identifiziert werden können. Diese Regel muss zumindest für einen ausreichend großen Abschnitt von hintereinander erzeugten Zählerwerten gelten. Insofern gilt eine strenge Monotonie abschnittsweise erzeugter Zählerwerte des gleichen Typs. Der Begriff "abschnittsweise" umfasst eine gewisse Anzahl von unmittelbar hintereinander erzeugten Zählerwerten, welche zusammen einen Abschnitt von Zählerwerten bilden. Die Randbedingung einer zumindest auf einen Abschnitt von Zählerwerten anzuwendenden strengen Monotonie ergibt sich aus einer Begrenzung der Zählerwerte bei Speicherung und Verarbeitung. Nach einer gewissen Anzahl erzeugter Zählerwerte wird der Zählerwert einen oberen Schwellwert erreichen, der vor einem Überlauf des Zählers steht. Spätestens in diesem Fall wird der Zähler beim nächsten Zählvorgang mit einem Zählerwert entsprechend einem unteren Schwellwert fortsetzen müssen. Aus Sicherheitsgründen wird die Breite des Zählers entsprechend groß zu wählen sein. In einem bevorzugten Ausführungsbeispiel umfasst der Zähler 32 Bit und kann daher etwa 4 Milliarden Zählerwerte unterscheiden.

Die Breite des Zählers ist dann hinreichend groß gewählt, wenn ein potentieller Angreifer entsprechend viel Zeit aufwenden müsste, um eine abgefangene Nachricht mit einem spezifischen Zählerwert erneut einsetzen zu können, weil zwischenzeitlich so viele Abfragen stattgefunden haben, dass die abgefangene Nachricht erneut als nachfolgend anzusehen ist.

In einem bevorzugten Ausführungsbeispiel der Erfindung wird die Nachricht ferner in Abhängigkeit eines Identifikationsmerkmals des Tokens erzeugt. Das Identifikationsmerkmal ermöglicht dem empfangenden Computersystem, jenen Benutzer zu ermitteln, der dem Token zugeordnet ist. Diese Information ist erforderlich, um den zugehörigen öffentlichen Schlüssel zu identifizieren, der für die Überprüfung der Signatur der empfangenen Nachricht erforderlich ist. Solange der zugehörige öffentliche Schlüssel auch anderweitig bestimmt werden kann, ist eine Übermittlung des Identifikationsmerkmals in der signierten Nachricht nicht zwingend erforderlich. Der Benutzer kann im Rahmen des Authentifizierungsvorgangs am Computersystem eine Auswahl des Benutzers vornehmen, beispielsweise durch manuelle Eingabe seines Benutzernamens (Login) über die Tastatur.

Die Nachricht kann ferner in Abhängigkeit einer Protokollversion erzeugt werden. Das Extrahieren der Protokollversion aus einer empfangenen Nachricht ermöglicht die Verwendung unterschiedlicher Formate für die erzeugte Nachricht, da das empfangende Computersystem die Nachricht in Abhängigkeit der codierten Protokollversion unterschiedlich bearbeiten kann.

Die Nachricht kann ferner in Abhängigkeit eines Flags erzeugt werden. Das Flag kann zum Einsatz kommen, um auf Probleme beim Erzeugen der signierten Nachricht hinzuweisen. Vorzugsweise zeigt das Flag einen Ausfall einer Stromversorgung im Token an. Das Flag indiziert damit den Zustand, dass eine gegebenenfalls vorhandene Echtzeituhr im Token keinen korrekten Zeitstempel erzeugen konnte, weil die Echtzeituhr entweder auf einen Startwert zurückgesetzt oder während des Ausfalls der Stromversorgung stehen geblieben ist. Alternativ oder zusätzlich kann das Flag einen anstehenden Zählerüberlauf signalisieren, sodass das empfangende Computersystem einen Zählerwert entsprechend einem unteren Schwellwert als dem oberen Schwellwert nachfolgend interpretieren kann.

Die Nachricht kann ferner in Abhängigkeit eines benutzerdefinierten Präfix erzeugt werden. Der benutzerdefinierte Präfix dient vorzugsweise zum Gruppieren von Token, beispielsweise zur Identifikation von Abteilungen eines Unternehmens. Der benutzerdefinierte Präfix kann auch zum Unterscheiden verschiedener Tokens des Benutzers eingesetzt werden, beispielsweise zur Unterscheidung von Rollen des Benutzers (privates Token, geschäftliches Token).

Je nach unterstützter Maximallänge einer Nachricht können auch noch weitere Inhalte in die Nachricht eingearbeitet werden, die am Computersystem zur weiteren Verarbeitung zur Verfügung stehen.

Vorzugsweise umfasst die zu signierende Nachricht eine Mindestlänge von 32 Bytes, die beispielsweise als ASCII-Zeichen codiert sind. Falls die zu signierende Nachricht kürzer als die Mindestlänge ist, kann diese durch Füllbytes nach einer definierten Auffüllregel aufgefüllt werden. Die Füllbytes können nach Erzeugen der Signatur wieder entfernt werden.

Vorzugsweise umfasst die zu signierende Nachricht ohne Füllbytes eine Länge von 23 Bytes, die mittels Füllbytes auf 32 Bytes vergrößert wird. Falls die Füllbytes vor dem Versenden der Nachricht aus der signierten Nachricht entfernt werden, muss die Auffüllregel dem authentifizierenden Computersystem bekannt gemacht werden, damit die nicht übertragenen Füllbytes der zu überprüfenden signierten Nachricht zur korrekten Überprüfung der Signatur wieder hinzugefügt werden. Bei den Füllbytes kann es sich um einzelne ASCII-Zeichen handeln, die an definierten Stellen in der zu signierenden Nachricht angeordnet sind. Die Signatur umfasst vorzugsweise 64 Zeichen mit je einem Byte und wird an die Nachricht angehängt. Die solcherart signierte Nachricht umfasst daher 87 Bytes, davon 23 Bytes für die Nachricht nach dem Entfernen der Füllbytes und 64 Bytes für die Signatur der auf 32 Bytes erweiterten Nachricht.

In einem bevorzugten Ausführungsbeispiel wird die signierte Nachricht nach Base64 oder nach einem vergleichbaren Format codiert, sodass sich die Länge der Nachricht im Verhältnis 4/3 erhöht, beispielsweise von 87 Bytes auf 116 Bytes. In den Betriebssystemen der Windows-Serie der Microsoft Corporation beträgt das Limit für die Eingabe von Kennwörtern 127 Bytes. Insofern ist es möglich, die empfangene Nachricht in ein Kennwort-Eingabefeld einzulesen.

In einem Ausführungsbeispiel weist das Token Mittel für die Abfrage eines Sicherheitsmerkmals auf, beispielsweise eine Tastatur für eine Kennwortabfrage. Die Nachricht wird in diesem Ausführungsbeispiel ferner in Abhängigkeit des abgefragten Kennworts erzeugt. Alternativ wird das Kennwort gemeinsam mit der signierten Nachricht übertragen. In einem bevorzugten Ausführungsbeispiel werden 8 Bytes für die Übertragung eines Kennworts gemeinsam mit oder in der signierten Nachricht reserviert.

Die Base64-Codierung hat den Vorteil, dass bei Übertragung der Base64-codierten und signierten Nachricht keine Sonderzeichen in der Nachricht enthalten sind. Die Base64-Codierung beruht auf der Verwendung von 64 ASCII-Zeichen, darunter die jeweils 26 Klein- und Großbuchstaben des Alphabets (a-z, A-Z), die Ziffern 0-9 sowie die ASCII-Zeichen plus ("+") und Schrägstrich ("/"). In einem bevorzugten Ausführungsbeispiel wird ein Base64-Derivat mit den ASCII-Zeichen Komma (",") und Semikolon (";") anstelle von plus ("+") und Schrägstrich ("/") verwendet.

In einem bevorzugten Ausführungsbeispiel der Erfindung erfolgt das Senden der signierten und gegebenenfalls codierten Nachricht über Universal Serial Bus (USB), Bluetooth oder Nahfeldkommunikation (NFC). Vorzugsweise wird die signierte und gegebenenfalls codierte Nachricht als simulierte Tastatureingabe an das Computersystem gesendet, indem das Token als Human Interface Device am Computersystem angemeldet wird und beispielsweise als USB- oder Bluetooth-Tastatur erkannt wird. Die Übertragung der signierten und gegebenenfalls codierten Nachricht kann über Tastatur-Scancodes erfolgen. Ein Tastatur-Scancode stellt die Codierung eines Tastendrucks auf einer Tastatur dar, der im Computersystem einem ASCII-Code zugewiesen wird.

Die ASCII-Zeichen der Base64-codierten Nachricht werden vorzugsweise in der Codierung der jeweils zugehörigen Tastatur-Scancodes übertragen. Dabei gilt es zu berücksichtigen, dass die Zuordnung zwischen ASCII-Zeichen und Tastatur-Scancodes von der Sprachkonfiguration des Computersystems abhängt. Zwar ist eine große Zahl von Tastatur-Scancodes unabhängig von der eingestellten Sprache. Allerdings gibt es einzelne ASCII-Zeichen, die je nach gegebener Sprache der vorliegenden Tastatur durch unterschiedliche Tastatur-Scancodes repräsentiert werden.

Ein erstes Beispiel dafür ist der Tastatur-Scancode der Taste "z" auf einer englischen Tastatur, welcher auf einer deutschen Tastatur als "y" interpretiert wird. Ein zweites Beispiel ist der Tastatur-Scancode der Taste "z" auf einer englischen Tastatur, welcher auf einer französischen Tastatur als "w" interpretiert wird. Darüber hinaus ist die Taste ";" auf einer französischen Tastatur mit der Taste "," auf einer deutschen Tastatur vertauscht. Bei einer kyrillischen Tastatur entsprechen fast alle englischen Tastatur-Scancodes spezifischen kyrillischen Zeichen mit einem abweichenden ASCII-Code. Insofern ist es möglich, durch Erzeugen von Tastatur-Scancodes zweier unterschiedlicher vorher vereinbarter ASCII-Zeichen, die einen sprachlichen Unterschied beinhalten, und dem Abgreifen des vom Computersystem erzeugten ASCII-Codes auf die eingestellte Sprachcodierung zu schließen.

In einem bevorzugten Ausführungsbeispiel wird die signierte und gegebenenfalls codierte Nachricht mit einem Prüfcode versehen. Der Prüfcode umfasst die Tastatur-Scancodes von mindestens zwei vorher vereinbarten ASCII-Zeichen, die sich zur Unterscheidung verschiedener Sprachkonfigurationen eignen. Vorzugsweise wird der Prüfcode der Nachricht vorangestellt. Als Prüfcode kommt beispielsweise eines der folgenden Zeichenpaare in Frage, die aus einer vordefinierten Sprache stammen: bei einer deutschen Tastatur können "y" und "," zu Unterscheidung verwendet werden, welche auf einer englischen Tastatur den Tasten "z" und ";" entsprechen. In einigen Ausführungsbeispielen ist der Prüfcode als Attribut in der zu signierenden Nachricht enthalten.

Im Falle einer Base64-Codierung besteht das zur Verfügung stehende "Alphabet" der Nachricht aus 64 Zeichen, die bevorzugt durch Tastatur-Scancodes repräsentiert werden. In einigen Ausführungsbeispielen werden die 64 Zeichen der Base64-Codierung durch die Tastatur-Scancodes der 26 Buchstaben des Alphabets (a-z), der Ziffern 0-9, der Umschalttaste ("Shift") sowie den Tastatur-Scancode des Kommas (",") ausgedrückt. Nachdem die Umschalttaste auf das Alphabet und das Komma-Zeichen wirken kann, lassen sich in Kombination mit der Umschalttaste die Zeichen A-Z sowie Semikolon (=Umschalttaste plus Komma auf der deutschen Tastatur) oder das Kleiner-Zeichen (=Umschalttaste plus Komma auf der englischen Tastatur) darstellen, sodass insgesamt 64 Zeichen darstellbar sind. Sofern Token und Computersystem die gleiche Sprachkonfiguration nutzen, kann das Computersystem über die der eingestellten Sprachkonfiguration resultierende Zuordnung von Tastatur-Scancodes zu ASCII-Zeichen die Tastatur-Scancodes der empfangenen Nachricht in eine als ASCII-Zeichen codierte und signierte Nachricht umwandeln.

Nach einem zweiten Aspekt der Erfindung ist ein Token zum Authentisieren eines Benutzers an einem Computersystem vorgesehen, umfassend eine Zähleinheit zum Erzeugen eines Zählerwertes, wobei zumindest ein Abschnitt erzeugter Zählerwerte eine streng monotone Folge bildet, einen Speicher zum Speichern eines dem Benutzer zugeordneten privaten Schlüssels, eine Recheneinheit zum Erzeugen einer Nachricht in Abhängigkeit des erzeugten Zählerwertes und zum Signieren der erzeugten Nachricht unter Verwendung des privaten Schlüssels, und eine Sendeeinheit zum Senden der signierten Nachricht an das Computersystem, wobei das Token dazu eingerichtet ist, das Verfahren nach dem ersten Aspekt der Erfindung auszuführen. Dabei muss der private Schlüssel dem Computersystem nicht zugänglich gemacht werden, um den Benutzer zu authentifizieren.

Das Token kann in dedizierter Hardware ("Hardware-Token") sowohl als eigenständiges elektronisches Gerät oder auch als Teil eines umfassenderen elektronischen Geräts integriert sein.

Die Einheiten eines in Hardware ausgeführten Tokens können über ein Bussystem miteinander kommunizieren, beispielsweise über einen I²C-Bus.

Der Speicher kann einen Sicherheitschip (security chip) umfassen, auf dem der private Schlüssel des Benutzers gespeichert ist. Vorzugsweise verlässt der private Schlüssel nicht den Sicherheitschip, indem der Sicherheitschip eine Funktion zum Signieren einer Nachricht bereitstellt. Der Sicherheitschip kann über eine Schnittstelle zum Einlesen und Speichern eines privaten Schlüssels umfassen. Vorzugsweise verfügt der Sicherheitschip über eine Funktion zum Erzeugen eines privaten Schlüssels und des dazugehörigen öffentlichen Schlüssels sowie eine Funktion zum Auslesen des öffentlichen Schlüssels.

Die Zähleinheit kann eine oder mehrere Komponenten zum Zählen umfassen, wobei jede einzelne Komponente beispielsweise ein Hardware-Zähler oder eine Echtzeituhr (Real Time Clock, RTC) sein kann.

In einem bevorzugten Ausführungsbeispiel liefert der Hardware-Zähler auf Anforderung eine Ganzzahl, die gegenüber der vorherigen Anforderung inkrementiert wurde. Erreicht der Hardware-Zähler einen oberen Schwellwert, beispielsweise unmittelbar vor einem Zähler-Überlauf, kann der Hardware-Zähler wieder bei einem unteren Schwellwert fortsetzen. Der Erreichen des oberen Schwellwerts bzw. das Fortsetzen am unteren Schwellwert kann dem Computersystem in der Nachricht mitgeteilt werden. Das Computersystem kann über den Aufbau des Zählerwerts informiert sein und daher wissen, dass nach dem Erreichen des oberen Schwellwerts mit dem unteren Schwellwert fortgesetzt wird.

Vorzugsweise ist die Echtzeituhr ein Taktgeber, der im Token unabhängig von äußeren Zeitsignalen arbeitet. Die Echtzeituhr kann über eine Temperaturkompensation zur Erhöhung der Genauigkeit verfügen. Die Echtzeituhr kann auch ein GPS-Empfänger sein, der in der Lage ist, die Uhrzeit aus GPS-Signalen zu extrahieren. Die Echtzeituhr kann ein Funkuhrempfänger sein, beispielsweise DCF77. Die Echtzeituhr kann auch eine Einheit zum Empfangen der Uhrzeit des Computersystems sein, mit dem das Token bei einem Authentifizierungsvorgang in Verbindung steht. Die Echtzeituhr kann ferner eine Einheit zum Kommunizieren über das Internet sein, wobei die Uhrzeit von einem oder mehreren Zeitservern bezogen wird.

Die Recheneinheit kann eine oder mehrere Komponenten zum Rechnen umfassen, wobei jede einzelne Komponente eine zentrale Recheneinheit (Central Processing Unit, CPU), ein Mikrocontroller (Micro Controlling Unit, MCU), eine arithmetischlogische Einheit (Arithmetic Logic Unit, ALU) oder eine parallele logische Einheit (Parallel Logic Unit, PLU) sein kann. So kann eine eigene Komponente der Recheneinheit zum Signieren der Nachricht und eine oder mehrere davon verschiedene Komponenten zum Erzeugen eines oder mehrerer Zählerwerte zuständig sein.

Die Sendeeinheit umfasst eine oder mehrere Komponenten zum Senden der Nachricht an das Computersystem, wobei jede einzelne Komponente als eine Schnittstelle gemäß Universal Serial Bus (USB), Bluetooth oder Nahfeldkommunikation (NFC) ausgeführt sein kann. Vorzugsweise repräsentiert das Token gegenüber einem zu authentifizierenden Computersystem eine Funktionalität als Tastatur, wenn das Token über die Sendeeinheit mit einem Computersystem verbunden ist. Die Sendeeinheit kann neben dem Betriebsmodus "Tastatur" auch über weitere Betriebsmodi verfügen, beispielsweise zum Übertragen eines im Token gespeicherten Schlüssels. Falls das Token im Rahmen einer Zwei-Faktor-Authentifizierung ein separates Sicherheitsmerkmal überträgt, kann dieses Sicherheitsmerkmal in einem separaten Betriebsmodus der Sendeeinheit übertragen werden.

Der Begriff Sendeeinheit schließt nicht aus, dass die Sendeeinheit auch Daten empfangen kann, beispielsweise zur Quittierung am Computersystem erfolgreich empfangener Daten oder Daten zur Konfiguration des Tokens, beispielsweise das Hochladen von Schlüsselpaaren oder das Empfangen von Anweisungen zum Erzeugen von Schlüsselpaaren.

Ein in Hardware ausgeführtes Token kann mehrteilig mit Schnittstellen zwischen den Teilen des Tokens ausgeführt sein. Vorzugsweise umfasst das Token eine Funkschnittstelle, beispielsweise Bluetooth und/oder Nahfeldkommunikation (NFC). Ein Ergänzungsmodul kann das Token um eine weitere Schnittstelle erweitern, beispielsweise um eine Schnittstelle gemäß Universal Serial Bus (USB).

Vorzugsweise verfügt die Schnittstelle gemäß Universal Serial Bus (USB) über einen Mikrocontroller, der das Token als USB-Tastatur an einem Computersystem anmeldet, sobald das Token über die USB-Schnittstelle mit dem Computersystem verbunden ist.

Ein in Hardware ausgeführtes Token kann über eine interne Stromversorgung verfügen, was insbesondere bei Token vorteilhaft ist, die lediglich über eine oder mehrere Funkschnittstellen zur Kommunikation mit dem Computersystem verfügen. Auch bei Token mit drahtgebundenen Schnittstellen, die eine externe Stromversorgung zulassen, kann eine interne Stromversorgung vorteilhaft sein, insbesondere wenn eine Echtzeituhr des Tokens versorgt werden soll. Die interne Stromversorgung kann beispielsweise ein Akkumulator, eine Batterie oder eine Solarzelle sein. Ein Token kann über eine Schnittstelle zu einer externen Stromversorgung verfügen.

Bei einem in Software ausgeführten Token können die genannten Einheiten Zähleinheit, Speicher, Recheneinheit und Sendeeinheit durch entsprechende Komponenten jenes Geräts substituiert werden, auf dem die Token-Software ausgeführt wird. Zur Authentifizierung des Benutzers an jenem Gerät, auf dem das Software-Token installiert ist, kann die Sendeeinheit eine Software-Schnittstelle zum Betriebssystem oder zu Anwendungsprogrammen des Geräts umfassen.

In einem bevorzugten Ausführungsbeispiel der Erfindung umfasst das Token ein erstes Bedienelement zum Initiieren eines Authentisierungsvorganges. Das erste Bedienelement kann ein Taster sein, den der Benutzer betätigt, um das Erzeugen und Versenden der signierten Nachricht zu bewirken. Für ein als Human Interface Device angemeldetes Gerät erscheint das Token dem Computersystem wie eine Tastatur, die mit Druck auf das erste Bedienelement simulierte Tastatureingaben erzeugt, die die signierte Nachricht repräsentieren.

In einem bevorzugten Ausführungsbeispiel der Erfindung enthält der Speicher einen öffentlichen Schlüssel, der dem privaten Schlüssel zugeordnet ist. Der öffentliche Schlüssel wird zwar nicht im Token zum Erzeugen der signierten Nachricht benötigt.

Allerdings muss der öffentliche Schlüssel für jedes Computersystem zugänglich sein, an dem das Token zum Authentisieren des Benutzers angeschlossen ist. Insofern ist es vorteilhaft, den öffentlichen Schlüssel im Token zu hinterlegen, damit dieser auf Anforderung in ein Computersystem eingespielt werden kann.

In einem bevorzugten Ausführungsbeispiel der Erfindung umfasst das Token ein zweites Bedienelement zum Initiieren eines Übertragungsvorganges des öffentlichen Schlüssels an das Computersystem. Das zweite Bedienelement kann ein Taster sein. Der öffentliche Schüssel kann über Tastatur-Scancodes übertragen werden. Das Token kann zusätzlich als USB-Datenträger ausgeführt sein, auf dem der öffentliche Schlüssel zwecks Transfer auf Computersysteme hinterlegt werden kann.

Nach einem dritten Aspekt der Erfindung ist ein Verfahren zum Authentifizieren eines Benutzers mit folgenden, in einem Computersystem ausgeführten Schritten vorgesehen:
- Empfangen einer signierten Nachricht von einem Token, wobei die signierte Nachricht von einem Zählerwert des Tokens nach dem zweiten Aspekt der Erfindung abhängig ist,
- Zuordnen des Benutzers zu der signierten Nachricht anhand eines Identifikationsmerkmals,
- Überprüfen der Signatur der signierten Nachricht unter Verwendung eines öffentlichen Schlüssels des Benutzers, und
- Vergleichen des aus der Nachricht extrahierten Zählerwertes mit dem Zählerwert eines vorhergehenden Authentifizierungsvorganges des Benutzers, wobei zumindest ein Abschnitt von Zählerwerten fortlaufender Authentifizierungsvorgänge des Benutzers eine streng monotone Folge bildet.

Nach einem bevorzugten Ausführungsbeispiel ist das Token als Human Interface Device mit dem Computersystem verbunden. Das Token kann die signierte Nachricht als simulierte Tastatureingabe codiert in Tastatur-Scancodes übermitteln. Vorzugsweise wird der empfangenen Nachricht ein Prüfcode vorangestellt oder in die signierte Nachricht integriert. Der Prüfcode umfasst die Tastatur-Scancodes von mindestens zwei vorher vereinbarten ASCII-Zeichen, die sich zur Unterscheidung verschiedener Sprachkonfigurationen eignen. Nachdem eine Vereinbarung zwischen Token und Computersystem über die im Prüfcode zu übermittelnden ASCII-Zeichen besteht, kann das Computersystem feststellen, welcher Sprachkonfiguration die empfangenen Tastatur-Scancodes entsprechen und die Tastatur-Scancodes den jeweils zugeordneten ASCII-Zeichen zuordnen. Die empfangene Nachricht kann nun - sofern sie vom Token entsprechend codiert wurde - gemäß Base64 decodiert werden.

Zur Überprüfung der Signatur muss der geeignete öffentliche Schlüssel identifiziert werden. Dazu ist es erforderlich, die empfangene Nachricht einem Benutzer zuzuordnen, um aus dem ermittelten Benutzer den zugehörigen öffentlichen Schlüssel zu ermitteln. Es ist somit nicht erforderlich, dass sich Benutzer und Computersystem ein geheimes Merkmal wie den privaten Schlüssel des Benutzers teilen müssen, um den Benutzer zu authentifizieren. Der Benutzer kann aus einem Identifikationsmerkmal in der signierten Nachricht bestimmt werden. Der Benutzer kann auch durch anderweitige Zuordnungen ermittelt werden, beispielsweise durch Eingabe eines Benutzernamens (Login) über eine Tastatur am Computersystem, während die Kennworteingabe durch das Token veranlasst wird. Dadurch ist es nicht zwingend erforderlich, ein Identifikationsmerkmal in die Nachricht zu integrieren.

Falls die zu signierende Nachricht durch Füllbytes auf eine Mindestlänge gebracht worden ist und die Füllbytes vor Übertragung der signierten Nachricht entfernt worden sind, ergänzt das Computersystem die nicht übertragenen Füllbytes entsprechend einer korrespondierenden Auffüllregel, bevor die Signatur der empfangenen Nachricht überprüft wird.

In einigen Ausführungsformen kann neben der signierten Nachricht des Tokens ein weiteres Sicherheitsmerkmal geprüft werden, beispielsweise durch Eingabe eines Kennworts über eine Tastatur des Computersystems oder des Tokens (Zwei-Faktor-Authentifizierung, two-factor authentication). Nur wenn das eingegebene Kennwort und die Überprüfung der signierten Nachricht des Tokens positiv verlaufen, wird Zugriff auf das Computersystem bzw. auf eine Anwendung des Computersystems gewährt.

Die Überprüfung des Tokens umfasst die Überprüfung der Signatur und die Überprüfung der strengen Monotonie des in der Nachricht enthaltenen Zählerwerts bzw. der in der Nachricht enthaltenen Zählerwerte. In Abhängigkeit der Sicherheitsanforderungen und der Synchronisierung unterschiedlicher Computersysteme, die das Token zur Authentifizierung des Benutzers verwenden, kann die Überprüfung der strengen Monotonie ferner die Überprüfung umfassen, dass der geprüfte Zählerwert das Inkrement des zuletzt geprüften Zählerwerts ohne eine Lücke darstellen muss.

In anderen Ausführungsbeispielen können Lücken zwischen dem aktuellen Zählerwert und dem zuletzt geprüften Zählerwert zulässig sein, insbesondere dann, wenn das Token zur Authentifizierung des Benutzers an einer Mehrzahl von Computersystemen eingesetzt wird, die den jeweils zuletzt geprüften Zählerwert nicht oder nicht ausreichend oft synchronisieren. In diesem Fall könnten jedoch Unbefugte die Nachricht an einem ersten Computersystem abgreifen, um die abgegriffene Nachricht an einem zweiten Computersystem einzuspielen, welches noch nicht Kenntnis von dem Authentifizierungsvorgang am ersten Computersystem erhalten hat. Um ein unzutreffendes positives Resultat einer Überprüfung des Tokens zu verhindern, kann eine Synchronisierung der überprüften Zählerwerte zwischen den Computersystemen vorgenommen werden. Alternativ oder zusätzlich kann ein Zeitstempel oder ein vergleichbares Attribut in die Nachricht aufgenommen werden, das für eine kurze Gültigkeitsdauer der Nachricht sorgt. Dazu kann ein in der Nachricht enthaltener Zeitstempel dienen, der eine Verwendung der empfangenen Nachricht nur innerhalb einer definierten Zeitspanne erlaubt.

Wenn sowohl die Überprüfung der Signatur, die Überprüfung aller Zählerwerte einschließlich eines Zeitstempels positiv verlaufen sind, ist die Authentifizierung des Benutzers erfolgreich. Dadurch wird verhindert, dass abgegriffene Nachrichten an anderen, noch nicht synchronisierten Computersystemen erfolgreich eingespielt werden können.

Der erfindungsgemäße Authentifizierungsvorgang lässt sich mit geringem Anpassungsaufwand in vorhandenen Authentifizierungsmodulen implementieren.

Beispielsweise kann der erfindungsgemäße Authentifizierungsvorgang an vorhandene Hooks eines LDAP-Authentifizierungsmoduls gehängt werden, damit die empfangenen Kennwortdaten gemäß dem dritten Aspekt dieser Erfindung verarbeitet werden. So kann der erfindungsgemäße Authentifizierungsvorgang in einer dynamischen Bibliothek implementiert werden, die vom LDAP-Authentifizierungsmodul aufgerufen wird. Aus der Sicht des Betriebssystems und der Anwendungsprogramme wird daher weiterhin eine standardkonforme LDAP-Authentifizierung angenommen.

Eine Integration der erfindungsgemäßen Authentifizierung in Betriebssysteme der Windows-Serie ist über eine Programmierschnittstelle, beispielsweise über die Windows Credential Management API, möglich. Vorzugsweise erfolgt die Integration der erfindungsgemäßen Authentifizierung über die Open Source Software pGina, welche eine erweiterbare Plugin-Architektur aufweist und die Programmierschnittstelle der Windows Credential Management API nutzt. Die erfindungsgemäße Authentifizierung kann in einem LDAP-Server realisiert sein, der über pGina mit der Windows Credential Management API verbunden ist. Am LDAP-Server ist vorzugsweise ein dem Benutzer zugeordnetes statisches Kennwort hinterlegt, welches der Windows Credential Management API zur Überprüfung übergeben wird. Alternativ kann das statische Kennwort im Token hinterlegt sein und an das Computersystem übermittelt werden. Ein statisches Kennwort ist bei Betriebssystemen der Windows-Serie notwendig, weil Windows zur Verschlüsselung von Benutzerdaten auf das Kennwort des Benutzers zurückgreift.

Das Computersystem, an dem die Authentifizierung durchgeführt wird, kann auch andere elektronische Geräte umfassen, für die eine Authentifizierung relevant ist. So kann das Computersystem auch ein Terminal zur Zutrittskontrolle und/oder Zeiterfassung sowie ein elektronisches Türschloss umfassen.

Die Authentifizierung am Computersystem kann der lokalen Zugangskontrolle dienen, beispielsweise unter Betriebssystemen wie Windows, Mac OS X, Linux und Unix. Die Authentifizierung am Computersystem kann der Verzeichnisanmeldung dienen, beispielsweise unter Windows Active Directory, SMB und CIFS. Ferner kann die Authentifizierung am Computersystem der Zugangskontrolle zu Anwendungsprogrammen, Diensten, Webanwendungen und für VPN dienen.

Nach einem vierten Aspekt der Erfindung ist ein Mobilgerät mit einem hardwareimplementierten Token vorgesehen, wobei das hardware-implementierte Token ein Token nach dem zweiten Aspekt der Erfindung umfasst.

Nach einem fünften Aspekt der Erfindung ist ein Mobilgerät mit einem software-implementierten Token vorgesehen, wobei das software-implementierte Token Anweisungen aufweist, die, wenn sie auf einem Prozessor des Mobilgeräts ausgeführt werden, die Schritte des Verfahrens nach dem ersten Aspekt der Erfindung implementieren.

Nach einem sechsten Aspekt der Erfindung ist ein Computerprogrammprodukt vorgesehen, das Anweisungen aufweist, die, wenn sie auf einem Prozessor ausgeführt werden, die Schritte des Verfahrens nach dem ersten Aspekt oder dem dritten Aspekt der Erfindung implementieren.

Die Erfindung kann ein Einrichtungs- und Wartungsprogramm umfassen, mit dem ein vorhandener privater Schlüssel und optional ein dazugehöriger öffentlicher Schlüssel in das Token übertragen werden. Vorzugsweise weist das Einrichtungs- und Wartungsprogramm eine Funktion zum Erzeugen eines Schlüsselpaares bestehend aus einem privaten Schlüssel und einem dazugehörigen öffentlichen Schlüssel auf oder eine Funktion, mit der das Token zum Erzeugen des Schlüsselpaares aufgefordert wird. Das Einrichtungs- und Wartungsprogramm kann zum Setzen und/oder Auslesen einer Uhrzeit für eine Echtzeituhr des Tokens dienen, beispielsweise zur erstmaligen Einrichtung der Uhrzeit oder zum Einstellen der Uhrzeit nach einem Stromausfall, der zu einem Stillstand oder zu einem Zurücksetzen einer Echtzeituhr des Tokens geführt hat. Das Einrichtungs- und Wartungsprogramm kann eine Funktion zum Setzen und/oder Auslesen des benutzerdefinierten Präfix aufweisen. Das Einrichtungs- und Wartungsprogramm kann eine Funktion zum Setzen und/oder Auslesen von Zählerständen aufweisen.

### KURZE BESCHREIBUNG DER ZEICHNUNGEN

Weitere Merkmale, Aufgaben und Vorteile der Erfindung ergeben sich aus der folgenden ausführlichen Beschreibung in Verbindung mit den beigefügten schematischen Zeichnungen, in denen:
Fig. 1 eine schematische Darstellung eines Tokens nach einem Ausführungsbeispiel der Erfindung zeigt,
Fig. 2 eine schematische Darstellung einer Nachricht zeigt, die von einem Token nach einem Ausführungsbeispiel der Erfindung signiert wird,
Fig. 3 ein Verfahren zum Authentisieren eines Benutzers an einem Computersystem nach einem Ausführungsbeispiel der Erfindung zeigt,
Fig. 4 ein Verfahren zum Authentifizieren eines Benutzers an einem Computersystem nach einem Ausführungsbeispiel der Erfindung zeigt,
Fig. 5 eine schematische Darstellung eines Mobilgeräts mit einem Hardware-Token nach einem Ausführungsbeispiel der Erfindung zeigt, und
Fig. 6 eine schematische Darstellung eines Mobilgeräts mit einem Software-Token nach einem Ausführungsbeispiel der Erfindung zeigt.

### AUSFÜHRLICHE BESCHREIBUNG VON AUSFÜHRUNGSBEISPIELEN DER ERFINDUNG

Die Erfindung wird zum Authentisieren und/oder Authentifizieren von Benutzern in einem Computersystem eingesetzt. Die Erfindung dient vorzugsweise zum Anmelden von Benutzern an einem Betriebssystem. Die Erfindung kann auch zum Authentisieren und/oder Authentifizieren in Anwendungsprogrammen oder Webanwendungen, beispielsweise in sozialen Netzwerken, eingesetzt werden. Die Erfindung eignet sich zum Überprüfen der Identität des dem Token zugeordneten Benutzers. Das Token kann in dedizierter Hardware ("Hardware-Token") sowohl als eigenständiges elektronisches Gerät oder auch als Teil eines umfassenderen elektronischen Geräts integriert sein. Das Token eignet sich auch zur Realisierung in Software ("Software-Token") zur Anwendung in einem mobilen, tragbaren Computer wie z.B. eines Tablet-Computers, eines Smartphones, eines Netbooks, eines Notebooks oder eines Laptops, wenn es darum geht, mit dem mobilen Gerät Zugriff auf ein Computersystem, auf spezifische Anwendungsprogramme oder Daten zu erlangen. Das Software-Token kann auch zur Authentifizierung an dem mobilen Gerät eingesetzt werden, in dem das Software-Token installiert ist. Der vorzugsweise Einsatz als Hardware-Token ist nur als ein mögliches Anwendungsgebiet zu sehen.

In den nachfolgenden Ausführungsbeispielen wird die Erfindung als isoliertes Hardware-Token implementiert, das die Anmeldung eines Benutzers am Betriebssystem eines Computersystems ermöglicht. Die Ausführungsbeispiele sind jedoch nicht darauf beschränkt; in analoger Weise gelten jedes Ausführungsbeispiel und seine offenbarten Merkmale der Erfindung für sämtliche dargelegte Einsatzgebiete.

Die einzelnen Ausführungsbeispiele heben in den meisten Fällen nur einzelne Merkmale der Erfindung hervor. Diese Darstellung dient der Übersichtlichkeit und der besseren Verständlichkeit der Erfindung. Jene Merkmale der Erfindung, die unabhängig von anderen Merkmalen der Erfindung sind, können beliebig miteinander kombiniert werden.

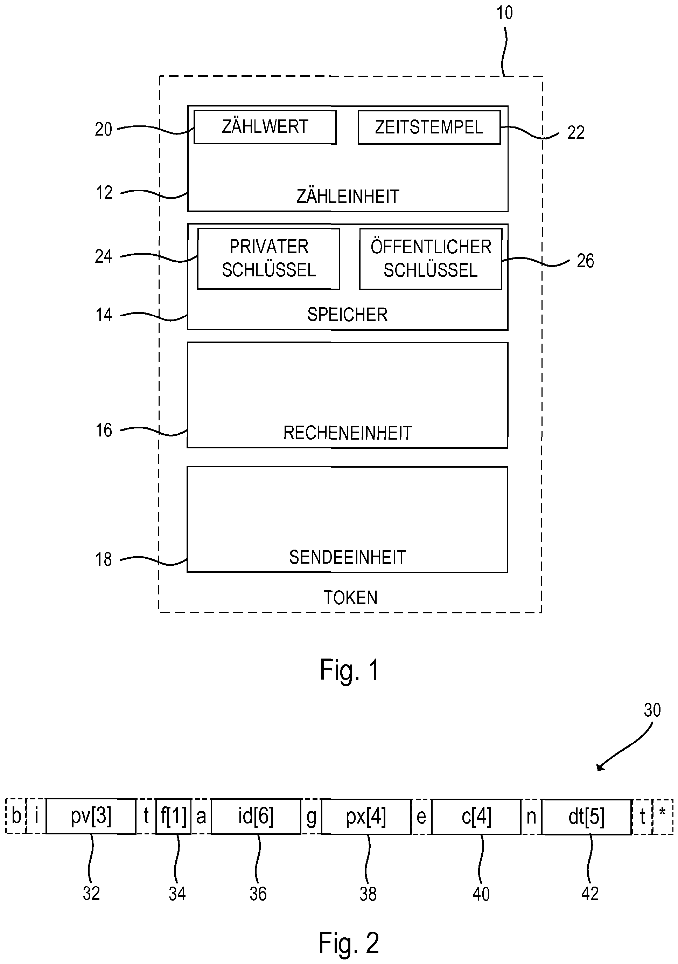

Fig. 1 zeigt den schematischen Aufbau eines Tokens 10, das eine Zähleinheit 12, einen Speicher 14, eine Recheneinheit 16 und eine Sendeeinheit 18 umfasst. Die Zähleinheit 12 dient zum Erzeugen eines oder mehrerer Zählerwerte 20, 22. Als Zählerwerte 20, 22 kommen beispielweise ein numerischer Zählerwert 20 und/oder ein Zeitstempel 22 in Frage. Im Speicher 14 ist ein privater Schlüssel 24 gespeichert, der dem Benutzer des Tokens 10 zugeordnet ist. Der private Schlüssel 24 muss nicht dem Computersystem zugänglich gemacht werden, damit dieses den Benutzer authentifizieren kann. Im Speicher 14 kann ferner ein öffentlicher Schlüssel 26 enthalten sein, der dem privaten Schlüssel 24 zugeordnet ist. Lediglich der öffentliche Schlüssel 26 oder eine Kopie davon muss dem Computersystem zur Authentifizierung zugänglich gemacht werden. Die Recheneinheit 16 ist dazu eingerichtet, eine Nachricht 30 zu erzeugen, indem die Zähleinheit 12 zum Erzeugen mindestens eines Zählerwerts 20, 22 veranlasst wird. Der mindestens eine erzeugte Zählerwert 20, 22 dient als Grundlage, um unter Verwendung des mindestens einen erzeugten Zählerwerts 20, 22 die Nachricht 30 zu erzeugen. Ein erzeugter Zählerwert 20, 22 zeichnet sich dadurch aus, dass der Zählerwert 20, 22 mit jeder Erzeugung eines neuen Zählerwerts 20, 22 gegenüber einem vorher erzeugten Zählerwert 20, 22 als nachfolgend erzeugter Zählerwert identifiziert werden kann. Diese Bedingung muss zumindest für die Zählerwerte einer Serie mit einer Mindestanzahl von Zählerwerten innerhalb der Serie gelten. Es ist keine Beschränkung auf numerische Werte gegeben; es sind beliebige Inhalte als Zählerwert 20, 22 vorgesehen, sofern der erzeugte Inhalt innerhalb einer als ausreichend groß definierten Serie von Inhalten als nachfolgend erzeugter Inhalt gegenüber den vorher erzeugten Inhalten identifiziert werden kann. Der Begriff nachfolgend kann in manchen Ausführungsbeispielen als unmittelbar nachfolgend zu verstehen sein, während in anderen Ausführungsbeispielen eine gewisse Anzahl von Zählerwerten 20, 22 zwischen dem aktuell erzeugtem und einem früheren Zählerwert 20, 22 liegen dürfen. Die Recheneinheit 30 ist ferner dazu eingerichtet, die solcherart erzeugte Nachricht 30 mit dem privaten Schlüssel 24 zu signieren. Die signierte Nachricht kann entsprechend den Anforderungen des Übertragungsweges und des empfangenden Computersystems entsprechend codiert werden, bevor die Sendeeinheit 18 die signierte und gegebenenfalls codierte Nachricht an ein Computersystem 70 sendet. Das Computersystem 70 empfängt die signierte und gegebenenfalls codierte Nachricht, um den Benutzer anhand der signierten Nachricht zu authentifizieren.

Fig. 2 zeigt den Aufbau einer zu signierenden Nachricht 30 nach einem Ausführungsbeispiel der Erfindung. Die Nachricht 30 kann vorzugsweise 32 Zeichen umfassen, die einer oder mehreren Zeichencodierungen angehören, beispielsweise ASCII mit einem Byte pro Zeichen. Die Nachricht 30 wird aus einem oder mehreren Attributen erzeugt, welche beispielsweise aneinander gereiht und optional durch Trennzeichen voneinander separiert sind. Die beispielhaft dargestellte Nachricht 30 ist aus folgenden sechs Attributen zusammengesetzt:
Das erste Attribut 32 repräsentiert eine Protokollversion der Nachricht 30, damit das empfangende Computersystem 70 in der Lage ist, den Aufbau der Nachricht 30 von Nachrichten 30 anderer Protokollversionen zu unterscheiden. Die Protokollversion 32 kann beispielsweise in 3 Bytes codiert werden.

Das zweite Attribut 34 repräsentiert ein Flag, das Problemfälle beim Erzeugen der Nachricht signalisiert, beispielsweise einen Stromausfall im Token, sodass eine Echtzeituhr im Token zum Erzeugen eines Zeitstempels stehengeblieben oder auf einen Startwert zurückgesetzt worden ist. Das Flag 34 kann beispielsweise in 1 Byte codiert werden.

Das dritte Attribut 36 repräsentiert ein Identifikationsmerkmal des Tokens 10, damit das Token einem Benutzer zugeordnet werden kann. Das Identifikationsmerkmal 36 des Tokens 10 kann beispielsweise in 6 Bytes codiert werden.

Das vierte Attribut 38 repräsentiert einen benutzerdefinierten Präfix, damit Token beispielsweise nach Abteilungen eines Unternehmens gruppiert oder einem Benutzer mehrere Token zugeordnet werden können. Der benutzerdefinierte Präfix 38 kann beispielsweise in 4 Bytes codiert werden.

Das fünfte Attribut 40 repräsentiert einen ersten codierten Zählerwert. Der erste codierte Zählerwert 40 entspricht einem von der Zähleinheit 12 erzeugten Zählerwert 20, 22 oder wird basierend auf dem erzeugten Zählerwert 20, 22 berechnet. Der erste codierte Zählerwert 40 kann ein numerischer Zählerwert 20 sein und beispielsweise in 4 Bytes codiert werden.

Das sechste Attribut 42 repräsentiert einen zweiten codierten Zählerwert. Der zweite codierte Zählerwert 42 entspricht einem von der Zähleinheit 12 erzeugten Zählerwert 20, 22 oder wird basierend auf dem erzeugten Zählerwert 20, 22 berechnet. Der zweite codierte Zählerwert 42 kann ein Zeitstempel 22 sein und beispielsweise in 5 Bytes codiert werden.

Die Nachricht 30 kann auch unter Zugrundelegung von einem oder mehreren der sechs Attribute erzeugt werden, beispielsweise durch das Aneinanderreihen von einem oder mehreren der sechs Attribute in beliebiger Reihenfolge.

In einem bevorzugten Ausführungsbeispiel werden weitere Bestandteile in die Nachricht 30 aufgenommen, um eine Mindestlänge der zu signierenden Nachricht zu gewährleisten, beispielsweise die ASCII-Repräsentanten der Zeichenfolge "bitagent*" (ohne Anführungszeichen), wobei die Attribute zwischen jeweils zwei benachbarten Zeichen der bisher erzeugten Nachricht 30 eingefügt werden. Die solcherart erzeugte Nachricht 30 kann nun signiert werden. Die eingefügten weiteren Bestandteile können nach dem Erzeugen der Signatur wieder aus der Nachricht entfernt werden, sodass diese nur zum Erzeugen und später beim Überprüfen der Signatur in der Nachricht enthalten sind, aber nicht bei der Übertragung der Nachricht.

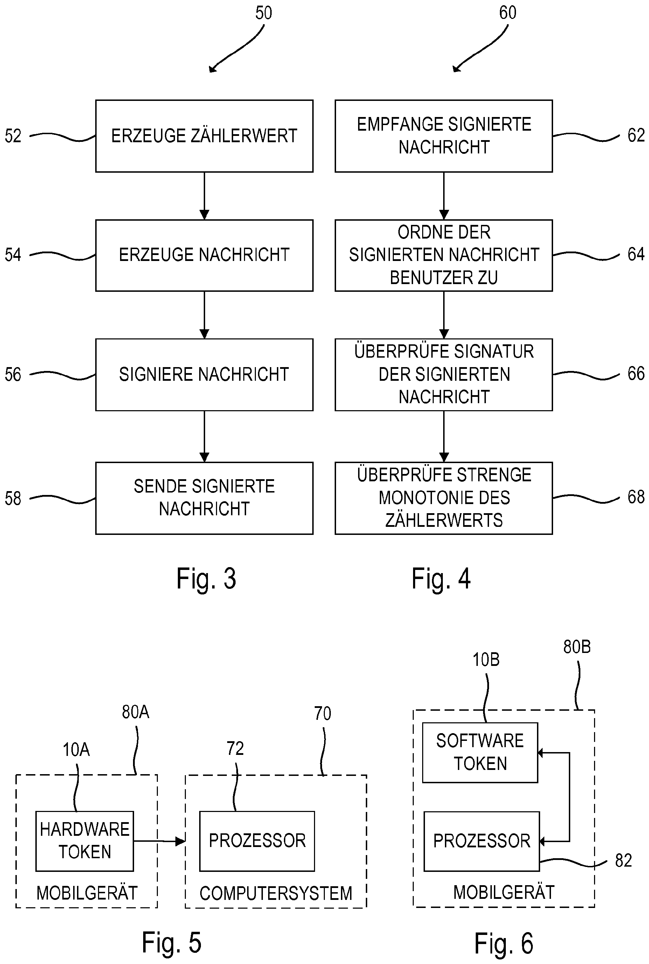

Fig. 3 zeigt das Verfahren 50 zum Authentisieren eines Benutzers an einem Computersystem 70. Die Verfahrensschritte werden in einem Token 10 ausgeführt.

In einem ersten Verfahrensschritt 52 erzeugt eine im Token 10 implementierte Zähleinheit 12 mindestens einen Zählerwert 20, 22. Ein erzeugter Zählerwert 20, 22 zeichnet sich dadurch aus, dass der mindestens eine Zählerwert 20, 22 mit jeder Erzeugung eines neuen Zählerwerts 20, 22 gegenüber einem vorher erzeugten Zählerwert 20, 22 als nachfolgend erzeugter Zählerwert identifiziert werden kann. Insofern bildet zumindest ein Abschnitt erzeugter Zählerwerte 20, 22 eine streng monotone Folge.

In einem zweiten Verfahrensschritt 54 wird eine Nachricht 30 in Abhängigkeit des mindestens einen erzeugten Zählerwertes 20, 22 erzeugt. Dazu kann der mindestens eine Zählerwert 20, 22 in einen zugehörigen codierten Zählerwert 40, 42 transformiert werden. In die Nachricht 30 können noch weitere Attribute und feste Bestandteile aufgenommen werden.

In einem dritten Verfahrensschritt 56 wird die erzeugte Nachricht 30 unter Verwendung eines privaten Schlüssels 24 des dem Token 10 zugeordneten Benutzers signiert. Der private Schlüssel 24 kann im Token 10 gespeichert sein. Die signierte Nachricht kann in Abhängigkeit des die Nachricht empfangenden Computersystems 70 und des gewählten Übermittlungsweges entsprechend codiert werden.

In einem vierten Verfahrensschritt 58 wird die signierte und gegebenenfalls codierte Nachricht an das Computersystem 70 zur Authentifizierung des Benutzers gesendet.

Fig. 4 zeigt ein Verfahren 60 zum Authentifizieren eines Benutzers an einem Computersystem 70.

In einem ersten Verfahrensschritt 62 empfängt das Computersystem 70 eine signierte und gegebenenfalls codierte Nachricht von einem Token 10 des Benutzers.

In einem zweiten Verfahrensschritt 64 ermittelt das Computersystem 70, welchem Benutzer die signierte Nachricht zugeordnet werden kann. Dazu wird ein geeignetes Identifikationsmerkmal 36 überprüft. Das Identifikationsmerkmal 36 ist bevorzugt als Attribut in der empfangenen Nachricht codiert. Das Identifikationsmerkmal 36 kann auch über andere Eingabekanäle bereitgestellt werden, beispielsweise durch manuelle Dateneingabe über eine Tastatur oder durch die Auswahl eines Benutzers. Über eine Zuordnungstabelle kann vom Identifikationsmerkmal 36 auf den Benutzer geschlossen werden.

In einem dritten Verfahrensschritt 66 ermittelt das Computersystem 70 den öffentlichen Schlüssel 26 desjenigen Benutzers, der mit dem festgestellten Identifikationsmerkmal 36 verknüpft ist. Nachdem die empfangene Nachricht unter Verwendung des zugehörigen privaten Schlüssels 24 des Benutzers signiert wurde, ist das Computersystem 70 mit dem ermittelten öffentlichen Schlüssel 26 in der Lage, die Authentizität der empfangenen Nachricht zu überprüfen.

Um das Authentifizierungsverfahren vor dem wiederholten Einspielen einer abgefangenen signierten Nachricht abzusichern, wird in einem vierten Verfahrensschritt 68 die strenge Monotonie des in der Nachricht enthaltenen mindestens einen Zählerwerts 20, 22 überprüft. Dazu wird der in der empfangenen Nachricht enthaltene mindestens eine Zählerwert 20, 22 aus der Nachricht extrahiert und mit dem jeweils zugeordneten vorherigen Zählerwert 20, 22 eines vorhergehenden Authentifizierungsvorganges 60 des Benutzers verglichen. Dabei müssen die ein oder mehreren neu empfangenen Zählerwerte jeweils als nachfolgende Werte im Vergleich zu dem vorhergehenden Authentifizierungsvorgang 60 identifiziert werden. In einigen Ausführungsbeispielen wird geprüft, dass ein oder mehrere der empfangenen Zählerwerte unmittelbar nachfolgend anschließen bzw. der Abstand zwischen dem jeweils neu empfangenen Zählerwert und dem zugehörigen vorher empfangenen Zählerwert unterhalb eines Grenzwertes liegt. Alternativ oder zusätzlich kann auch eine Gültigkeitsdauer der Nachricht geprüft werden, beispielsweise anhand eines in der Nachricht enthaltenen Zeitstempels 22.

Das Token kann als Hardware-Token konzipiert sein, welches ein elektronisches Gerät darstellt. Fig. 5 zeigt ein Mobilgerät 80A, in dem ein erfindungsgemäßes Token als Hardware-Token 10A integriert ist. Das Mobilgerät 80A kann spezifisch auf die Funktionalität eines Tokens ausgelegt und mit einer Schnittstelle zur Kommunikation mit einem Computersystem ausgestattet sein. Das Mobilgerät kann auch ein mobiler Computer sein, beispielsweise ein Tablet-Computer, Netbook, Notebook oder ein Smartphone, optional mit Schnittstellen zu einem zweiten oder mehreren Geräten. Der Definition eines Hardware-Tokens 10A steht es nicht entgegen, dass dieses einen Prozessor umfasst, auf dem Anweisungen zur Realisierung der Funktionalität des Tokens ablaufen und insofern die Funktionalität des Hardware-Tokens auch durch Software bewirkt wird. Entscheidend für die Klassifikation als Hardware-Token ist der Umstand, dass die Software innerhalb des geschlossenen Systems des Hardware-Tokens abläuft.

Das Token kann auch als Software-Token zur Ausführung auf einem Prozessor eines elektronischen Geräts realisiert werden. Fig. 6 zeigt ein Mobilgerät 80B, in dem ein erfindungsgemäßes Token als Software-Token 10B integriert ist. Das Software-Token 10B kann als Anwendungsprogramm ("App"), in einer Middleware oder im Betriebssystem des Mobilgeräts 80B integriert sein. Das Software-Token umfasst Anweisungen, die auf mindestens einen Prozessor 82 des Mobilgeräts 80B ausgeführt werden.

Die Abgrenzung des Software-Tokens 10B gegenüber der Software eines Hardware-Tokens 10A ist dadurch gegeben, dass die Ressourcen zur Ausführung der Token-Software mit den übrigen Anwendungen und Diensten des Mobilgerät 80B geteilt werden, während die Software des Hardware-Tokens 10A exklusiv auf Ressourcen des Hardware-Tokens 10A läuft, welche von den übrigen Ressourcen des Mobilgeräts 80A abgeschottet sind.

Zur Erfindung gehören im Übrigen alle in den Ausführungsbeispielen genannten Komponenten, die für die Realisierung eines Hardware- oder Software-Tokens erforderlich sind. Die in den vorangehenden Ausführungsbeispielen beschriebene Aufgabenverteilung zwischen den einzelnen Komponenten des Tokens ist beispielhaft zu verstehen. Es sind auch andere Aufteilungen zwischen den Komponenten des Tokens denkbar, die in äquivalenter Form die beschriebenen Merkmale der Erfindung realisieren.

Die Einzelheiten, die in der obigen Beschreibung von Ausführungsbeispielen enthalten sind, sollen nicht als Einschränkung des Schutzbereichs der Erfindung zu verstehen sein, sondern als exemplarische Darstellung einiger ihrer Ausführungsformen. Viele Varianten sind möglich und dem Fachmann sofort ersichtlich. Insbesondere betrifft dies Variationen, die eine Kombination von Merkmalen der einzelnen Ausführungsbeispiele umfassen, die in der vorliegenden Spezifikation offenbart sind. Daher soll der Bereich der Erfindung nicht durch die dargestellten Ausführungsbeispiele, sondern durch die angehängten Ansprüche und ihre rechtlichen Äquivalente bestimmt sein.

## Patentansprüche

1. Verfahren (50) zum Authentisieren eines Benutzers an einem Computersystem (70) mit folgenden, in einem Token (10) ausgeführten Schritten:
Erzeugen (52) eines Zählerwertes (20, 22) unter Verwendung einer im Token (10) implementierten Zähleinheit (12), wobei zumindest ein Abschnitt erzeugter Zählerwerte (20, 22) eine streng monotone Folge bildet,
Erzeugen (54) einer Nachricht (30) in Abhängigkeit des erzeugten Zählerwertes (20, 22),
Signieren (56) der erzeugten Nachricht (30) unter Verwendung eines privaten Schlüssels (24) des Benutzers, wobei der private Schlüssel (24) im Token (10) gespeichert ist, und wobei der private Schlüssel (24) oder eine Kopie davon dem Computersystem (70) nicht zur Verfügung gestellt wird,
Anmelden am Computersystem (70) als Eingabegerät (Human Interface Device), und
Senden (58) und Kodieren der signierten Nachricht als Eingabedaten an das Computersystem (70),
wobei die Eingabedaten als Tastatur-Scancodes einer definierten Sprachkonfiguration codiert sind und die Nachricht einen Prüfcode umfasst, der die Tastatur-Scancodes von mindestens zwei vorher vereinbarten ASCII-Zeichen umfasst, die sich zur Unterscheidung verschiedener Sprachkonfigurationen der Tastatur-Scancodes eignen.

2. Verfahren (50) nach Anspruch 1, wobei die zu signierende Nachricht eine Mindestlänge von 32 Bytes aufweist; und/oder
wobei die gesendete Nachricht maximal 127 Bytes umfasst.

3. Verfahren (50) nach Anspruch 1 oder Anspruch 2, wobei die signierte Nachricht nach Base64 oder nach einem vergleichbaren Format codiert wird, sodass sich die Länge der Nachricht im Verhältnis 4/3 erhöht.

4. Verfahren (50) nach einem der Ansprüche 1 bis 3, wobei die zu signierende Nachricht Füllbytes umfasst, die beim Senden der signierten Nachricht nicht übertragen werden.

5. Verfahren (50) nach einem der Ansprüche 1 bis 4,
wobei die Nachricht (30) ferner in Abhängigkeit eines Identifikationsmerkmals (36) des Tokens (10) erzeugt wird.

6. Verfahren (50) nach einem der Ansprüche 1 bis 5,
wobei die Zähleinheit (12) eine Uhr umfasst, und wobei der Zählerwert (20, 22) einen Zeitstempel (22) umfasst.

7. Verfahren (50) nach einem der Ansprüche 1 bis 6,
wobei das Senden (58) der signierten Nachricht über Universal Serial Bus (USB), Bluetooth oder Nahfeldkommunikation (NFC) erfolgt.

8. Token (10) zum Authentisieren eines Benutzers an einem Computersystem (70), wobei das Token (10) als Eingabegerät (Human Interface Device) zum Übertragen von Eingabedaten ausgeführt ist, das Token umfassend:
eine Zähleinheit (12) zum Erzeugen (52) eines Zählerwertes (20, 22), wobei zumindest ein Abschnitt erzeugter Zählerwerte (20, 22) eine streng monotone Folge bildet,
einen Speicher (14) zum Speichern eines dem Benutzer zugeordneten privaten Schlüssels (24),
eine Recheneinheit (16)
zum Erzeugen (54) einer Nachricht (30) in Abhängigkeit des erzeugten Zählerwertes (20, 22) und
zum Signieren (56) der erzeugten Nachricht (30) unter Verwendung des privaten Schlüssels (24), und
eine Sendeeinheit (18) zum Senden (58) und Kodieren der signierten Nachricht als Eingabedaten an das Computersystem (70),
wobei die Eingabedaten als Tastatur-Scancodes einer definierten Sprachkonfiguration codiert sind und die Nachricht einen Prüfcode umfasst, der die Tastatur-Scancodes von mindestens zwei vorher vereinbarten ASCII-Zeichen umfasst, die sich zur Unterscheidung verschiedener Sprachkonfigurationen der Tastatur-Scancodes eignen.

9. Token (10) nach Anspruch 8,
wobei das Token (10) dazu eingerichtet ist, das Verfahren (50) nach einem der Ansprüche 2 bis 7 auszuführen.

10. Token (10) nach Anspruch 8 oder Anspruch 9,
wobei das Token (10) ein erstes Bedienelement zum Initiieren eines Authentisierungsvorganges (50) umfasst.

11. Token (10) nach einem der Ansprüche 8 bis 10,
wobei der Speicher (14) einen öffentlichen Schlüssel (26) enthält, der dem privaten Schlüssel (24) zugeordnet ist.

12. Token (10) nach Anspruch 11,
wobei das Token (10) ein zweites Bedienelement zum Initiieren eines Übertragungsvorganges des öffentlichen Schlüssels (26) an das Computersystem (70) umfasst.

13. Verfahren (60) zum Authentifizieren eines Benutzers mit folgenden, in einem Computersystem (70) ausgeführten Schritten:
Anmelden eines Tokens (10) am Computersystem (70) als Eingabegerät (Human Interface Device),
Empfangen (62) einer signierten Nachricht von dem Token (10), wobei die signierte Nachricht von einem Zählerwert (20, 22) des Tokens (10) abhängig ist,
Zuordnen (64) des Benutzers zu der signierten Nachricht anhand eines Identifikationsmerkmals (36),
Überprüfen (66) der Signatur der signierten Nachricht unter Verwendung eines öffentlichen Schlüssels (26) des Benutzers, und
Vergleichen (68) des aus der Nachricht (30) extrahierten Zählerwertes (20, 22) mit dem Zählerwert (20, 22) eines vorhergehenden Authentifizierungsvorganges (60) des Benutzers, wobei zumindest ein Abschnitt von Zählerwerten (20, 22) fortlaufender Authentifizierungsvorgänge des Benutzers eine streng monotone Folge bildet,
wobei das Empfangen (62) der signierten Nachricht das Decodieren der signierten Nachricht als Eingabedaten umfasst, und
wobei die Eingabedaten als Tastatur-Scancodes einer definierten Sprachkonfiguration codiert sind und die Nachricht einen Prüfcode umfasst, der die Tastatur-Scancodes von mindestens zwei vorher vereinbarten ASCII-Zeichen umfasst, die sich zur Unterscheidung verschiedener Sprachkonfigurationen der Tastatur-Scancodes eignen.

14. Mobilgerät (80A) mit einem hardware-implementierte Token (10A), wobei das hardware-implementierte Token (10A) ein Token (10) nach einem der Ansprüche 8 bis 12 umfasst; oder
Mobilgerät (80B) mit einem software-implementierten Token (10B), wobei das software-implementierte Token (10B) Anweisungen aufweist, die, wenn sie auf einem Prozessor (82) des Mobilgeräts (80B) ausgeführt werden, die Schritte des Verfahrens (50) nach einem der Ansprüche 1 bis 7 implementieren.

15. Computerprogrammprodukt, das Anweisungen aufweist, die, wenn sie auf einem Prozessor (72, 82) ausgeführt werden, die Schritte des Verfahrens (50, 60) nach einem der Ansprüche 1 bis 7 oder nach Anspruch 13 implementieren.

## Claims

1. A method (50) for authenticating a user to a computer system (70), the method comprising the following steps performed in a token (10):
generating (52) a counter value (20, 22) by utilizing a counting unit (12) implemented in the token (10), wherein at least a portion of generated counter values (20, 22) forms a strictly monotonous sequence,
generating (54) a message (30) depending on the generated counter value (20, 22),
signing (56) the generated message (30) by utilizing a private key (24) of the user, wherein the private key (24) is stored in the token (10), and wherein the private key (24) or a copy thereof is not provided to the computer system (70),
registering on the computer system (70) as an input device (Human Interface Device), and
transmitting (58) and encoding the signed message as input data to the computer system (70),
wherein the input data is encoded as keyboard scan codes of a defined language configuration, and wherein the message includes a check code comprising the keyboard scan codes of at least two previously agreed ASCII characters suitable for distinguishing different language configurations of the keyboard scan codes.

2. The method (50) of claim 1, wherein the message to be signed has a minimum length of 32 bytes; and/or
wherein the transmitted message comprises a maximum of 127 bytes.

3. The method (50) of claim 1 or claim 2, wherein the signed message is encoded according to Base64 or a comparable format such that the length of the message increases in the ratio 4/3.

4. The method (50) of any one of claims 1 to 3, wherein the message to be signed comprises padding bytes which are not transmitted upon transmission of the signed message.

5. The method (50) of any one of claims 1 to 4,
wherein the message (30) is further generated depending on an identification feature (36) of the token (10).

6. The method (50) of any one of claims 1 to 5,
wherein the counting unit (12) comprises a clock, and wherein the counter value (20, 22) comprises a time stamp (22).

7. The method (50) of any one of claims 1 to 6,
wherein the transmitting (58) of the signed message is via Universal Serial Bus (USB), Bluetooth or Near Field Communication (NFC).

8. A token (10) for authenticating a user to a computer system (70),
wherein the token (10) is implemented as input device (Human Interface Device) for transmitting input data, the token comprising:
a counting unit (12) for generating (52) a counter value (20, 22), wherein at least a portion of generated counter values (20, 22) forms a strictly monotonous sequence,
a memory (14) for storing a private key (24) associated with the user,
a processing unit (16)
for generating (54) a message (30) depending on the generated counter value (20, 22) and
for signing (56) the generated message (30) by utilizing the private key (24), and
a transmitting unit (18) for transmitting (58) and encoding the signed message as input data to the computer system (70),
wherein the input data is encoded as keyboard scan codes of a defined language configuration, and wherein the message includes a check code comprising the keyboard scan codes of at least two previously agreed ASCII characters suitable for distinguishing different language configurations of the keyboard scan codes.

9. The token (10) of claim 8,
wherein the token (10) is adapted to perform the method (50) of any one of claims 2 to 7.

10. The token (10) of claim 8 or claim 9,
wherein the token (10) comprises a first control element for initiating an authentication process (50).

11. The token (10) of any one of claims 8 to 10,
wherein the memory (14) comprises a public key (26) associated with the private key (24).

12. The token (10) according to claim 11,
wherein the token (10) comprises a second control element for initiating a public key (26) transmission to the computer system (70).

13. A method (60) for authenticating a user, the method comprising the following steps performed in a computer system (70):
registering a token (10) on the computer system (70) as an input device (Human Interface Device),
receiving (62) a signed message from the token (10), wherein the signed message depends on a counter value (20, 22) of the token (10),
assigning (64) the user to the signed message by means of an identification feature (36),
verifying (66) the signature of the signed message by utilizing a public key (26) of the user, and
comparing (68) the counter value (20, 22) extracted from the message (30) with the counter value (20, 22) of a previous authentication process (60) of the user, wherein at least a portion of counter values (20, 22) of consecutive authentication processes of the user forms a strictly monotonous sequence,
wherein receiving (62) the signed message comprises decoding the signed message as input data, and
wherein the input data is encoded as keyboard scan codes of a defined language configuration, and wherein the message includes a check code comprising the keyboard scan codes of at least two previously agreed ASCII characters suitable for distinguishing different language configurations of the keyboard scan codes.

14. A mobile device (80A) comprising a hardware-implemented token (10A), wherein the hardware-implemented token (10A) comprises a token (10) of any one of claims 8 to 12; or
a mobile device (80B) comprising a software-implemented token (10B), wherein the software-implemented token (10B) comprises instructions that, when executed on a processor (82) of the mobile device (80B), implement the steps of the method (50) of any one of claims 1 to 7.

15. A computer program product comprising instructions that, when executed on a processor (72, 82), implement the steps of the method (50, 60) of any one of claims 1 to 7 or claim 13.

## Revendications

1. Procédé (50) pour l'authentification d'un utilisateur au niveau d'un système informatique (70), comportant les étapes suivantes, exécutées dans un jeton (10) :
générer (52) une valeur de compteur (20, 22) à l'aide d'une unité de comptage (12) implémentée dans le jeton (10), au moins une partie des valeurs de compteur générées (20, 22) formant une suite strictement monotone ;
générer (54) un message (30) en fonction de la valeur de compteur générée (20, 22) ;
signer (56) le message généré (30) à l'aide d'une clé privée (24) de l'utilisateur, la clé privée (24) étant mémorisée dans le jeton (10), et la clé privée (24) ou une copie de celle-ci n'étant pas fournie au système informatique (70) ;
se connecter au système informatique (70) en tant que dispositif d'entrée (périphérique d'interface humaine) ; et
envoyer (58) et coder le message signé en tant que données d'entrée au système informatique (70),
dans lequel les données d'entrée sont codées en tant que codes de balayage de clavier d'une configuration de langage définie et le message comporte un code de vérification qui comporte les codes de balayage de clavier d'au moins deux caractères ASCII préalablement approuvés, qui conviennent pour la distinction de configurations de langage différentes des codes de balayage de clavier.

2. Procédé (50) selon la revendication 1, dans lequel le message à signer présente une longueur minimale de 32 octets; et/ou
dans lequel le message envoyé comporte au maximum 127 octets.

3. Procédé (50) selon la revendication 1 ou la revendication 2, dans lequel le message signé est codé en Base64 ou selon un format comparable de telle sorte que la longueur du message augmente dans la proportion 4/3.

4. Procédé (50) selon l'une des revendications 1 à 3, dans lequel le message à signer comporte des octets de remplissage, qui ne sont pas transmis lors de l'envoi du message signé.

5. Procédé (50) selon l'une des revendications 1 à 4,
dans lequel le message (30) est en outre généré en fonction d'une caractéristique d'identification (36) du jeton (10).

6. Procédé (50) selon l'une des revendications 1 à 5,
dans lequel l'unité de comptage (12) comporte une horloge, et dans lequel la valeur de compteur (20, 22) comporte un horodatage (22).

7. Procédé (50) selon l'une des revendications 1 à 6,
dans lequel l'envoi (58) du message signé a lieu par un bus série universel (USB), Bluetooth ou une communication en champ proche (NFC).

8. Jeton (10) pour l'authentification d'un utilisateur au niveau d'un système informatique (70), dans lequel le jeton (10) est exécuté en tant que dispositif d'entrée (périphérique d'interface humaine) pour la transmission de données d'entrée, le jeton comportant :
une unité de comptage (12) pour la génération (52) d'une valeur de compteur (20, 22), au moins une partie des valeurs de compteur générées (20, 22) formant une suite strictement monotone ;
une mémoire (14) pour la mémorisation d'une clé privée (24) associée à l'utilisateur ;
une unité informatique (16) :
pour la génération (54) d'un message (30) en fonction de la valeur de compteur générée (20, 22) ; et
pour la signature (56) du message généré (30) à l'aide de la clé privée (24) ; et
une unité d'envoi (18) pour l'envoi (58) et le codage du message signé en tant que données d'entrée au système informatique (70),
dans lequel les données d'entrée sont codées en tant que codes de balayage de clavier d'une configuration de langage définie et le message comporte un code de vérification qui comporte les codes de balayage de clavier d'au moins deux caractères ASCII préalablement approuvés, qui conviennent pour la distinction de configurations de langage différentes des codes de balayage de clavier.

9. Jeton (10) selon la revendication 8,
dans lequel le jeton (10) est configuré pour exécuter le procédé (50) selon l'une revendication des revendication 2 à 7.

10. Jeton (10) selon la revendication 8 ou la revendication 9,
dans lequel le jeton (10) comporte un premier élément de commande pour l'initialisation d'un processus d'authentification (50).

11. Jeton (10) selon l'une des revendications 8 à 10,
dans lequel la mémoire (14) contient une clé publique (26) qui est associée à la clé privée (24).

12. Jeton (10) selon la revendication 11,
dans lequel le jeton (10) comporte un second élément de commande pour l'initialisation d'un processus de transmission de la clé publique (26) au système informatique (70).

13. Procédé (60) pour l'authentification d'un utilisateur, comportant les étapes suivantes, exécutées dans un système informatique (70) :
connecter un jeton (10) au système informatique (70) en tant que dispositif d'entrée (périphérique d'interface humaine) ;
recevoir (62) un message signé à partir du jeton (10), le message signé étant dépendant d'une valeur de compteur (20, 22) du jeton (10) ;
attribuer (64) l'utilisateur au message signé sur la base d'une caractéristique d'identification (36) ;
vérifier (66) la signature du message signé à l'aide d'une clé publique (26) de l'utilisateur ; et
comparer (68) la valeur de compteur (20, 22) extraite du message (30) à la valeur de compteur (20, 22) d'un processus d'authentification précédent (60) de l'utilisateur, au moins une partie des valeurs de compteur (20, 22) des processus d'authentification continus de l'utilisateur formant une suite strictement monotone,
dans lequel la réception (62) du message signé comporte le décodage du message signé en tant que données d'entrée, et
dans lequel les données entrées sont codées en tant que codes de balayage de clavier d'une configuration de langage définie et le message comporte un code de vérification qui comporte les codes de balayage de clavier d'au moins deux caractères ASCII préalablement approuvés, qui conviennent pour la distinction de configurations de langage différentes des codes de balayage de clavier.

14. Terminal mobile (80A) comportant un jeton (10A) implémenté dans un matériel, le jeton (10A) implémenté dans un matériel comportant un jeton (10) selon l'une des revendications 8 à 12 ; ou
terminal mobile (80B) comportant un jeton (10B) implémenté dans un logiciel, le jeton (10B) implémenté dans un logiciel présentant des instructions qui, lorsqu'elles sont exécutées sur un processeur (82) du terminal mobile (80B), implémentent les étapes du procédé (50) selon l'une des revendications 1 à 7.

15. Produit programme d'ordinateur, qui présente des instructions qui, lorsqu'elles sont exécutées sur un processeur (72, 82), implémentent les étapes du procédé (50, 60) selon l'une des revendications 1 à 7 ou selon la revendication 13.
